# EUROPÄISCHE PATENTSCHRIFT

(11) **EP 3 963 652 B1**
(45) Veröffentlichungstag und Bekanntmachung des Hinweises auf die Patenterteilung: **21.06.2023**
(21) Anmeldenummer: 20703406.7
(22) Anmeldetag: 30.01.2020
(51) Int. Cl.: H01M 8/04089, H01M 8/04225, H01M 8/04223, H01M 8/04302, H01M 8/0432, H01M 8/04537, H01M 8/04746

(54) **VERFAHREN ZUM STARTEN EINER BRENNSTOFFZELLENVORRICHTUNG UNTER FROSTSTARTBEDINGUNGEN SOWIE BRENNSTOFFZELLENVORRICHTUNG UND KRAFTFAHRZEUG**
METHOD FOR STARTING A FUEL CELL APPARATUS UNDER COLD START CONDITIONS, AND FUEL CELL APPARATUS AND MOTOR VEHICLE
PROCÉDÉ DE DÉMARRAGE D'UN DISPOSITIF DE PILES À COMBUSTIBLE DANS DES CONDITIONS DE DÉMARRAGE EN CAS DE GEL AINSI QUE DISPOSITIF DE PILES À COMBUSTIBLE ET VÉHICULE À MOTEUR

(30) Priorität: 29.04.2019 DE 102019206119
(43) Veröffentlichungstag der Anmeldung: 09.03.2022
(73) Patentinhaber: Audi AG, 85045 Ingolstadt (DE)
(72) Erfinder: LIPHARDT, Leonard, 74535 Mainhardt (DE); DISSON, Sebastian, 68753 Waghäusel (DE); SUEMATSU, Keigo, 74172 Neckarsulm (DE); VALBUENA ENCINAS, Francisco Javier, 70174 Stuttgart (DE)
(74) Vertreter: Hentrich Patent- & Rechtsanwaltspartnerschaft mbB
(86) Internationale Anmeldenummer: PCT/EP2020/052215
(87) Internationale Veröffentlichungsnummer: WO 2020/221480

(56) Entgegenhaltungen:
- EP-A1- 2 086 042
- DE-T5-112008 000 628
- DE-T5-112008 003 072
- DE-T5-112008 003 476

## Beschreibung

Die Erfindung ist gebildet durch ein Verfahren zum Starten einer Brennstoffzellenvorrichtung mit einer Mehrzahl von Brennstoffzellen unter Froststartbedingungen, umfassend die Schritte des Feststellens des Vorliegens von Froststartbedingungen für die Brennstoffzellenvorrichtung, der anodenseitigen Zuführung eines wasserstoffhaltigen Reaktanten und der kathodenseitigen Zuführung eines sauerstoffhaltigen Reaktanten in einem unterstöchiometrischen Verhältnis mit einem Sauerstoffdefizit, Beibehaltens der Zuführung der Reaktanten in einem unterstöchiometrischen Verhältnis für ein vorgebbares Zeitintervall, nach Ablauf des Zeitintervalls Bewirken des vollständigen Entladens der Brennstoffzellen in einer Discharge-Phase, und anschließend Überführen der Brennstoffzellenvorrichtung in einen Normalmodus mit der Zuführung der Reaktanten gemäß den Erfordernissen für den gegebenen Betriebszustand und der Leistungsanforderung. Die Erfindung betrifft weiterhin eine Brennstoffzellenvorrichtung sowie ein Kraftfahrzeug.

Brennstoffzellenvorrichtungen, insbesondere wenn sie in mobilen Einheiten wie Kraftfahrzeugen eingesetzt werden, können variierenden Umgebungsbedingungen unterliegen, wobei insbesondere die Umgebungstemperatur bedeutsam für den Betrieb der Brennstoffzellenvorrichtung einschließlich von deren Start und Stopp ist. Liegen nämlich Frostbedingungen beim Start der Brennstoffzellenvorrichtung vor, oder sind beim Abstellen der Brennstoffzellenvorrichtung Frostbedingungen bei einem nachfolgenden Start zu erwarten, müssen geeignete Maßnahmen ergriffen werden, um Eisblockaden in dem durch eine Mehrzahl von Brennstoffzellen gebildeten Brennstoffzellenstapel zu vermeiden, da Eisblockaden die Zufuhr der Reaktanten, also des wasserstoffhaltigen Brennstoffes und des sauerstoffhaltigen Gases, insbesondere Luft, beeinträchtigen oder sogar vollständig blockieren können. Zur Vermeidung von Eisblockaden sind geeignete Verfahrensschritte bekannt, die das Trocknen des Brennstoffzellenstapels beim Abstellen der Brennstoffzellenvorrichtung einschließen; Eisblockaden können aber auch entstehen, wenn beim Start der Brennstoffzellenvorrichtung entstehendes Produktwasser einfriert. Auch dazu sind geeignete Maßnahmen bekannt, um durch Anwendung geeigneter Froststart-Strategien das Einfrieren von Produktwasser zu verhindern.

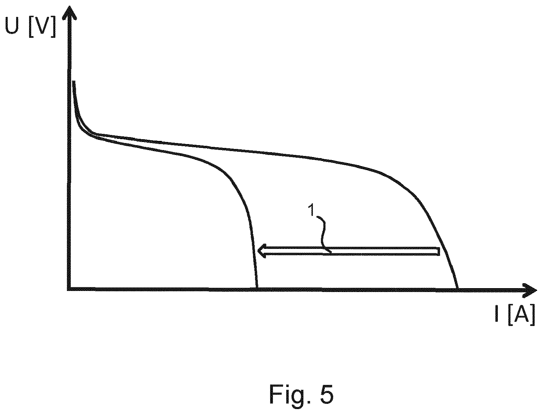

Eine Möglichkeit zur Beseitigung von Eisblockaden ist dabei gegeben durch die Bereitstellung ausreichender Heizleistung, und zwar durch die Brennstoffzellenvorrichtung selber, wobei nur eine geringe elektrische Leistung generiert werden soll. Dies kann erreicht werden durch einen geringen Wirkungsgrad der Brennstoffzellen, indem bei der üblichen Bereitstellung des Sauerstoffes aus der Luft der Luftmassenstrom reduziert wird. Dadurch wird der vom Transportwiderstand dominierte Bereich in dem Strom-Spannnungsdiagramm zu kleineren Strömen hin verschoben, wo der ohmsche Bereich dominiert, wie dies in der Figur 5 dargestellt ist.

Eine Reduktion des Luftmassenstroms ist in der US 10,038,205 B2 offenbart, die beschreibt, dass beim Start bei niedrigen Temperaturen eine verringerte Zufuhr von Luft durch eine Drosselung des Verdichters erfolgt, wobei ein Ersatzgasstrom mit wenig Luft durch das Öffnen eines Ventils bereit gestellt wird.

Die DE 11 2008 003 476 T5 beschreibt ein Brennstoffzellensystem, das unter Berücksichtigung von Auf-/Entlade-Beträgen in Bezug auf eine Kapazitätskomponente einer Brennstoffzelle betrieben und gesteuert wird.

Die DE 11 2008 003 072 T5 beschreibt ein Brennstoffzellensystem, das eine Brennstoffzelle durch einen niedereffizienten Betrieb aufwärmt.

Die DE 102 97 626 B4 behandelt die Vorgehensweise bei einem Luft/Luft-Start, wobei das Anfahrverfahren auch ein Rezirkulieren des Anodenströmungsfeldabgases vorsieht, welches anfänglich vollständig mit Luft gefüllt ist und dann mit Brennstoff angereichert wird.

Es besteht ein Problem beim Starten einer Brennstoffzellenvorrichtung bei Froststartbedingungen mit einem reduzierten Luftmassenstrom zur Verringerung des Wirkungsgrades, nämlich dass geringe Massen- und Volumenströme vorliegen, mit denen der Wasseraustrag aus den Gaskanälen der Kathode nicht erfolgen kann. Deshalb sammelt sich dort Flüssigwasser und beeinträchtigt die Gasverteilung in den Gaskanälen, was aufgrund elektrochemischer Effekte zu sehr hohen und sehr niedrigen Einzelzellspannungen führt, wobei insbesondere die hohen Zellspannungen zur Degradation der Elektroden beitragen.

Der Erfindung liegt daher die Aufgabe zugrunde, ungewollte Spannungsunterschiede in den Einzelzellen einer Brennstoffvorrichtung bei einem Verfahren zum Starten einer Brennstoffzellenvorrichtung unter Froststartbedingungen zu verringern oder sogar zu vermeiden. Aufgabe ist weiterhin, eine verbesserte Brennstoffzellenvorrichtung und ein verbessertes Kraftfahrzeug bereitzustellen.

Der das Verfahren betreffende Teil der Aufgabe wird durch ein Verfahren mit den Merkmalen des Anspruches 1, der die Brennstoffzellenvorrichtung betreffende Teil wird durch eine Brennstoffzellenvorrichtung mit den Merkmalen des Anspruches 6 und der das Kraftfahrzeug betreffende Teil der Aufgabe wird durch ein Kraftfahrzeug mit den Merkmalen des Anspruches 7 gelöst. Vorteilhafte Ausgestaltungen mit zweckmäßigen Weiterbildungen der Erfindung sind in den abhängigen Ansprüchen angegeben.

Bei dem Verfahren zum Starten einer Brennstoffzellenvorrichtung mit einer Mehrzahl von Brennstoffzellen unter Froststartbedingungen, wird zunächst das Vorliegen von Froststartbedingungen für die Brennstoffzellenvorrichtung festgestellt, also überprüft, ob anhand interner oder externer Parameter Froststartbedingungen bestätigt werden können, die selbst bei Außentemperaturen unter Null Grad Celsius nicht zwingend gegeben sein müssen, wenn ein Kraftfahrzeug mit erwärmter Brennstoffzellenvorrichtung nur kurz gestoppt wird. Für den Fall des Vorliegens von Froststartbedingungen erfolgt dann eine anodenseitige Zuführung eines wasserstoffhaltigen Reaktanten und eine kathodenseitigen Zuführung eines sauerstoffhaltigen Reaktanten in einem unterstöchiometrischen Verhältnis mit einem Sauerstoffdefizit zum Betreiben der Brennstoffzellenvorrichtung mit einem geringen Wirkungsgrad zur Wärmegenerierung. Es folgt ein Beibehalten der Zuführung der Reaktanten in einem unterstöchiometrischen Verhältnis für ein vorgebbares Zeitintervall und nach Ablauf des Zeitintervalls ein Bewirken des vollständigen Entladens der Brennstoffzellen in einer Discharge-Phase. Anschließend wird die Brennstoffzellenvorrichtung in einen Normalmodus mit der Zuführung der Reaktanten gemäß den Erfordernissen für den gegebenen Betriebszustand und der Leistungsanforderung überführt. Die Discharge-Phase hat zur Folge, dass alle Einzelzellen der Brennstoffzellenvorrichtung auf ein gemeinsames Potential eingestellt werden, so dass im Normalmodus eine gleichmäßige Sauerstoffversorgung zu einer übereinstimmenden Zellspannung aller Einzelzellen führt.

Erfindungsgemäß wird das vollständige Entladen der Brennstoffzellen bewirkt, indem die Zufuhr des sauerstoffhaltigen Reaktanten aus der Reaktantenquelle gestoppt und der gesamte Sauerstoff in der Brennstoffzelle verbraucht wird, ggfs. indem der sauerstoffhaltige Reaktant rezirkuliert und dabei der Sauerstoff fortschreitend verbraucht wird.

Wichtig ist, dass nach der Discharge-Phase mit dem Bereitstellen eines gemeinsamen Zellpotentials keine neuen Probleme durch Blockaden in den Gaskanälen auftreten können, also die Erwärmung ausreichend fortgeschritten ist. Dies wird gewährleistet, indem das Zeitintervall in Anhängigkeit der konkreten gegebenen Froststartbedingungen so bemessen wird, dass zum Ende des Zeitintervalls Blockaden in den Versorgungs- und Reaktionswegen der Reaktanten beseitigt sind.

Auch bei dem neuen Verfahren besteht auch die Möglichkeit, vor der Discharge-Phase die Erwärmung der Brennstoffzellenvorrichtung dadurch zu fördern, dass als sauerstoffhaltiger Reaktant Luft genutzt wird und die Zuführung des sauerstoffhaltigen Reaktanten in einem unterstöchiometrischen Verhältnis durch eine Verringerung des Luftmassenstroms erfolgt.

Vorteilhaft ist weiterhin, dass die Discharge-Phase solange beibehalten wird, bis alle Brennstoffzellen ein gemeinsames elektrisches Potential aufweisen und in dem Normalmodus dieselbe Zielspannung besitzen, so dass auch ein Kriterium für die Bestimmung der Dauer der Discharge-Phase vorliegt.

Die verbesserte Brennstoffzellenvorrichtung zur Durchführung des Verfahrens zeichnet sich dadurch aus, dass eine Kontrolleinheit für den Start und die Beendigung der Discharge-Phase vorgesehen ist, wobei diese Kontrolleinheit in die Vorrichtungssteuerung integriert ist.

Das neue Kraftfahrzeug mit einer verbesserten, nach dem erfindungsgemäßen Verfahren betreibbaren Brennstoffzellenvorrichtung zeigt insgesamt weniger Verschleiß bzw. Degradation und besitzt eine gesteigerte Effizienz.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:

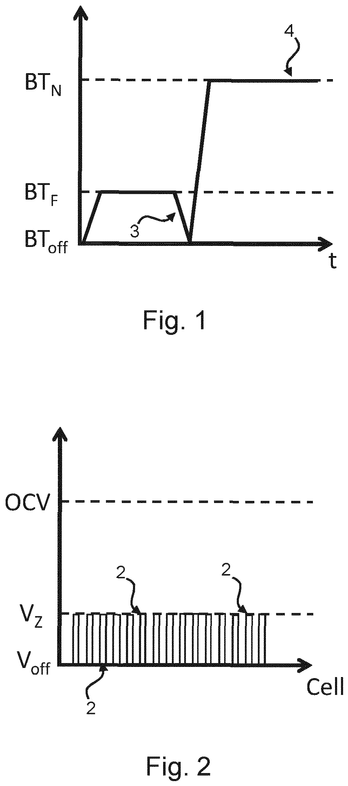

- Figur 1: eine zeitabhängige Darstellung (Zeit t) des Start einer Brennstoffzellenvorrichtung bei Froststartbedingungen mit dem dazu erforderlichen Lastwechsel, einschließlich der DischargePhase, wobei der Froststartbetrieb strichliert mit BT_{F}, der Normalbetrieb mit BT_{N} und die ausgeschaltete Brennstoffzellenvorrichtung mit BT_{off} an der Ordinate gekennzeichnet sind,
- Figur 2: das Zellspannungsbild für alle Einzelzellen (Cell) nach Ende der Discharge-Phase und dem Übergang in den Normalmodus, wobei die Leerlaufspannung mit OCV und die Zielspannung mit V_{Z} an der Ordinate gekennzeichnet sind.
- Figur 3: eine der Figur 1 entsprechende Darstellung zu einem aus dem Stand der Technik bekannten Verfahren,
- Figur 4: eine der Figur 2 entsprechende Darstellung eines Zellspannungsbildes während eines Lastwechsel, und
- Figur 5: eine schematische Darstellung des Einflusses der Luftmassenverknappung bei einem Froststart.

Eine Brennstoffzellenvorrichtung umfasst in der Regel einen Brennstoffzellenstapel, der eine Mehrzahl von in Reihe geschalteten Brennstoffzellen aufweist.

Jede der Brennstoffzellen umfasst eine Anode und eine Kathode sowie eine die Anode von der Kathode trennende protonenleitfähige Membran. Die Membran ist aus einem lonomer, vorzugsweise einem sulfonierten Tetrafluorethylen-Polymer (PTFE) oder einem Polymer der perfluorierten Sulfonsäure (PFSA) gebildet. Alternativ kann die Membran als eine sulfonierte Hydrocarbon-Membran gebildet sein.

Den Anoden und/oder den Kathoden kann zusätzlich ein Katalysator beigemischt sein, wobei die Membranen vorzugsweise auf ihrer ersten Seite und/oder auf ihrer zweiten Seite mit einer Katalysatorschicht aus einem Edelmetall oder aus Gemischen umfassend Edelmetalle wie Platin, Palladium, Ruthenium oder dergleichen beschichtet sind, die als Reaktionsbeschleuniger bei der Reaktion der jeweiligen Brennstoffzelle dienen.

Über Anodenräume innerhalb des Brennstoffzellenstapels wird den Anoden Brennstoff (zum Beispiel Wasserstoff) zugeführt. In einer Polymerelektrolytmembranbrennstoffzelle (PEM-Brennstoffzelle) werden an der Anode Brennstoff oder Brennstoffmoleküle in Protonen und Elektronen aufgespaltet. Die Membran lässt die Protonen (zum Beispiel H⁺) hindurch, ist aber undurchlässig für die Elektronen (e⁻). An der Anode erfolgt dabei die folgende Reaktion: 2H₂ → 4H⁺ + 4e⁻ (Oxidation/Elektronenabgabe). Während die Protonen durch die Membran zur Kathode hindurchtreten, werden die Elektronen über einen externen Stromkreis an die Kathode oder an einen Energiespeicher geleitet. Über Kathodenräume innerhalb des Brennstoffzellenstapels kann den Kathoden Kathodengas (zum Beispiel Sauerstoff oder Sauerstoff enthaltende Luft) zugeführt werden, so dass kathodenseitig die folgende Reaktion stattfindet: O₂ + 4H⁺ + 4e⁻ → 2H₂O (Reduktion/Elektronenaufnahme).

Sofern beim Starten einer Brennstoffzellenvorrichtung Froststartbedingungen vorliegen, besteht die Gefahr, dass in dem durch eine Mehrzahl von Brennstoffzellen gebildeten Brennstoffzellenstapel Kanäle zum Zuführen der Reaktanten durch Eis blockiert werden, wobei das Eis durch eine unzureichende Trocknung des Brennstoffzellenstapels beim Abstellen der Brennstoffzellenvorrichtung oder durch Einfrieren des Produktwassers beim Start der Brennstoffzellenvorrichtung gebildet werden kann. Liegt anodenseitig eine Blockade vor, tritt eine Wasserstoffverarmung auf, die zu einer tiefen Umpolung führt, die durch Kohlenstoffkorrosion irreversible Schäden an der Membranelektrodenanordnung hervorruft.

Vorhandene Blockaden lassen sich durch Bereitstellen ausreichender Heizleistung durch die Brennstoffzellenvorrichtung auflösen, die dafür viel Wärme produzieren soll und wenig elektrische Leistung bereit stellen muß. Dies entspricht einem Betrieb mit einem verringerten Wirkungsgrad, der sich erreichen lässt, wenn als sauerstoffhaltiger Reaktant Luft genutzt wird und die Zuführung des sauerstoffhaltigen Reaktanten in einem unterstöchiometrischen Verhältnis durch eine Verringerung des Luftmassenstroms 1 erfolgt (vgl. Figur 5).

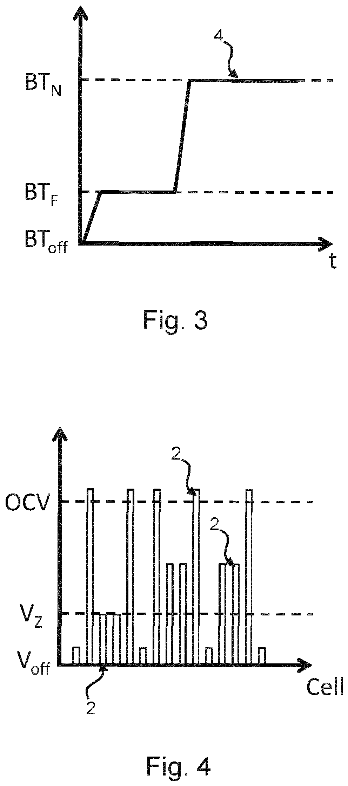

Die aus den Figuren 3 und 4 ersichtlichen nachteiligen Folgen dieser Betriebsweise, nämlich stark unterschiedliche Einzelzellspannungen 2, werden vermieden, indem ein Verfahren zum Starten einer Brennstoffzellenvorrichtung mit einer Mehrzahl von Brennstoffzellen unter Froststartbedingungen angewendet wird, das die Schritte umfasst des Feststellens des Vorliegens von Froststartbedingungen für die Brennstoffzellenvorrichtung, der anodenseitigen Zuführung eines wasserstoffhaltigen Reaktanten und der kathodenseitigen Zuführung eines sauerstoffhaltigen Reaktanten in einem unterstöchiometrischen Verhältnis mit einem Sauerstoffdefizit, Beibehaltens der Zuführung der Reaktanten in einem unterstöchiometrischen Verhältnis für ein vorgebbares Zeitintervall, nach Ablauf des Zeitintervalls Bewirken des vollständigen Entladens der Brennstoffzellen in einer Discharge-Phase 3, und anschließend Überführen der Brennstoffzellenvorrichtung in einen Normalmodus 4 mit der Zuführung der Reaktanten gemäß den Erfordernissen für den gegebenen Betriebszustand und der Leistungsanforderung.

Dabei wird das vollständige Entladen der Einzelzellen 2 bewirkt, indem die Zufuhr des sauerstoffhaltigen Reaktanten aus der Reaktantenquelle gestoppt und der gesamte Sauerstoff in der Brennstoffzelle verbraucht wird, gegebenenfalls indem der sauerstoffhaltige Reaktant rezirkuliert und dabei der Sauerstoff fortschreitend verbraucht wird.

Um sicher zu stellen, dass bei dem Übergang in den Normalmodus 4 keine Blockaden mehr vorliegen, ist das Zeitintervall in Anhängigkeit der konkreten gegebenen Froststartbedingungen so bemessen, dass zum Ende des Zeitintervalls Blockaden in den Versorgungs- und Reaktionswegen der Reaktanten beseitigt sind und insbesondere alle Einzelzellen 2 ein gemeinsames elektrisches Potential aufweisen und in dem Normalmodus 4 dieselbe Zielspannung besitzen.

Die verbesserte Brennstoffzellenvorrichtung besitzt eine Kontrolleinheit mit der zur Durchführung des Verfahrens der Start und die Beendigung der Discharge-Phase kontrolliert wird, wobei die Kontrolleinheit in die Vorrichtungssteuerung integriert ist.

### BEZUGSZEICHENLISTE:

- 1: Verringerung Luftmassenstrom
- 2: Einzellzelle / Brennstoffzelle
- 3: Discharge-Phase
- 4: Normalmodus

## Patentansprüche

1. Verfahren zum Starten einer Brennstoffzellenvorrichtung mit einer Mehrzahl von Brennstoffzellen (2) unter Froststartbedingungen, umfassend die Schritte:
- des Feststellens des Vorliegens von Froststartbedingungen für die Brennstoffzellenvorrichtung,
- der anodenseitigen Zuführung eines wasserstoffhaltigen Reaktanten und der kathodenseitigen Zuführung eines sauerstoffhaltigen Reaktanten in einem unterstöchiometrischen Verhältnis mit einem Sauerstoffdefizit,
- Beibehaltens der Zuführung der Reaktanten in einem unterstöchiometrischen Verhältnis für ein vorgebbares Zeitintervall,
- nach Ablauf des Zeitintervalls Bewirken des vollständigen Entladens der Brennstoffzellen (2) in einer Discharge-Phase (3),
- und anschließend Überführen der Brennstoffzellenvorrichtung in einen Normalmodus (4) mit der Zuführung der Reaktanten gemäß den Erfordernissen für den gegebenen Betriebszustand und der Leistungsanforderung,
**dadurch gekennzeichnet, dass** das vollständige Entladen der Brennstoffzellen (2) bewirkt wird, indem die Zufuhr des sauerstoffhaltigen Reaktanten aus der Reaktantenquelle gestoppt und der gesamte Sauerstoff in der Brennstoffzelle (2) verbraucht wird.

2. Verfahren nach Anspruch 1, **dadurch gekennzeichnet, dass** der sauerstoffhaltige Reaktant rezirkuliert und dabei der Sauerstoff fortschreitend verbraucht wird.

3. Verfahren nach Anspruch 1 oder 2, **dadurch gekennzeichnet, dass** das Zeitintervall in Anhängigkeit der konkreten gegebenen Froststartbedingungen so bemessen wird, dass zum Ende des Zeitintervalls Blockaden in den Versorgungs- und Reaktionswegen der Reaktanten beseitigt sind.

4. Verfahren nach einem der Ansprüche 1 bis 3, **dadurch gekennzeichnet, dass** als sauerstoffhaltiger Reaktant Luft genutzt wird und die Zuführung des sauerstoffhaltigen Reaktanten in einem unterstöchiometrischen Verhältnis durch eine Verringerung des Luftmassenstroms (1) erfolgt.

5. Verfahren nach einem der Ansprüche 1 bis 4, **dadurch gekennzeichnet, dass** die Discharge-Phase (3) solange beibehalten wird, bis alle Brennstoffzellen (2) ein gemeinsames elektrisches Potential aufweisen und in dem Normalmodus (4) dieselbe Zielspannung besitzen.

6. Brennstoffzellenvorrichtung mit einer Mehrzahl von Brennstoffzellen (2) und einer Kontrolleinheit für den Start und die Beendigung der Discharge-Phase, wobei die Kontrolleinheit in die Vorrichtungssteuerung integriert ist und das Verfahren nach einem der Ansprüche 1 bis 5 durchführt.

7. Kraftfahrzeug mit einer Brennstoffzellenvorrichtung nach Anspruch 6.

## Claims

1. A method of starting a fuel cell apparatus having a plurality of fuel cells (2) under freeze start conditions, comprising the steps of:
- of determining the existence of freeze-start conditions for the fuel cell apparatus,
- supplying on the anode side a hydrogen-containing reactant and on the cathode side an oxygen-containing reactant in a sub stoichiometric ratio with an oxygen deficit,
- maintaining the supply of the reactants in a sub stoichiometric ratio for a predeterminable time interval,
- after expiration of the time interval, effecting complete discharge of the fuel cells (2) in a discharge phase (3),
- and subsequently transferring the fuel cell device to a normal mode (4) with the supply of the reactants in accordance with the requirements for the given operating state and the power requirement, **characterized in that** the complete discharge of the fuel cells (2) is effected by stopping the supply of the oxygen-containing reactant from the reactant source and consuming all the oxygen in the fuel cell (2).

2. Process according to claim 1, **characterized in that** the oxygen-containing reactant is recirculated and the oxygen is consumed progressively in the process.

3. Process according to claim 1 or 2, **characterized in that** the time interval is dimensioned as a function of the specific given frost-start conditions in such a way that blockages in the supply and reaction paths of the reactants are eliminated at the end of the time interval.

4. Process according to one of the claims 1 to 3, **characterized in that** air is used as oxygen-containing reactant and the oxygen-containing reactant is supplied in a sub stoichiometric ratio by reducing the air mass flow (1).

5. Method according to any one of the claims 1 to 4, **characterized in that** the discharge phase (3) is maintained until a fuel cells (2) have a common electrical potential and have the same target voltage in the normal mode (4).

6. A fuel cell apparatus comprising a plurality of fuel cells (2) and the control unit for starting and terminating the discharge phase, wherein the control unit is integrated into the apparatus control system and performs the method according to any one of claims 1 to 5.

7. Motor vehicle with a fuel cell device according to claim 6.

## Revendications

1. Procédé de démarrage d'un dispositif de piles à combustible doté d'une pluralité de piles à combustible (2) dans des conditions de démarrage par temps de gel, comprenant les étapes de :
- détermination de la présence de conditions de démarrage par temps de gel pour le dispositif de piles à combustible,
- fourniture côté anode d'un réactif contenant de l'hydrogène et de fourniture côté cathode d'un réactif contenant de l'oxygène selon un rapport sous-stœchiométrique avec un déficit en oxygène,
- maintien de la fourniture de réactifs selon un rapport sous-stoechiométrique pour un intervalle de temps pouvant être prédéterminé,
- après écoulement de l'intervalle de temps, réalisation de la décharge complète des piles à combustible (2) lors d'une phase de décharge (3),
- puis le transfert du dispositif de piles à combustible dans un mode normal (4) avec la fourniture des réactifs conformément aux exigences relatives à l'état de fonctionnement donné et l'exigence de performance,
**caractérisé en ce que** la décharge complète des piles à combustible (2) est réalisée en arrêtant la fourniture du réactif contenant de l'oxygène depuis la source de réactif et en consommant la totalité de l'oxygène de la pile à combustible (2).

2. Procédé selon la revendication 1, **caractérisé en ce que** le réactif contenant de l'oxygène est remis en circulation et **en ce que** l'oxygène est consommé progressivement.

3. Procédé selon la revendication 1 ou 2, **caractérisé en ce que** l'intervalle de temps est mesuré en fonction des conditions de démarrage par temps de gel données spécifiques de telle manière qu'à la fin de l'intervalle de temps des blocages sont éliminés dans les voies d'approvisionnement et de réaction des réactifs.

4. Procédé selon l'une quelconque des revendications 1 à 3, **caractérisé en ce que** l'air est utilisé comme réactif contenant de l'oxygène et la fourniture du réactif contenant de l'oxygène selon un rapport sous-stoechiométrique s'effectue par une diminution du débit massique d'air (1).

5. Procédé selon l'une quelconque des revendications 1 à 4, **caractérisé en ce que** la phase de décharge (3) est maintenue aussi longtemps que toutes les piles à combustible (2) présentent un potentiel électrique commun et possèdent en mode normal (4) la même tension cible.

6. Dispositif de piles à combustible doté d'une pluralité de piles à combustible (2) et d'une unité de commande pour le démarrage et l'arrêt de la phase de décharge, dans lequel l'unité de commande est intégrée dans le système de commande du dispositif et le procédé est réalisé selon l'une quelconque des revendications 1 à 5.

7. Véhicule automobile doté d'un dispositif de piles à combustible selon la revendication 6.
